# EUROPÄISCHE PATENTSCHRIFT

(11) **EP 2 299 611 B1**
(45) Veröffentlichungstag und Bekanntmachung des Hinweises auf die Patenterteilung: **20.11.2013**
(21) Anmeldenummer: 10008263.5
(22) Anmeldetag: 07.08.2010
(51) Int. Cl.: H04B 10/2531

(54) **Optisch kontrollierte und verzerrungsfreie Verzögerung optischer Pulse**
Optically monitored and distortion-free delay of optical pulses
Impulsions optiques optiquement contrôlées et sans distorsions

(30) Priorität: 18.09.2009 DE 102009041849
(43) Veröffentlichungstag der Anmeldung: 23.03.2011
(73) Patentinhaber: Deutsche Telekom AG, 53113 Bonn (DE)
(72) Erfinder: Wiatrek, Andrzej, 04613 Lucka (DE); Schneider, Thomas, Prof., 14552 Michendorf OT Wilhelmshorst (DE)
(74) Vertreter: Kohlhof, Stephan

(56) Entgegenhaltungen:
- JP-A- 2009 063 951
- JP-A- 2009 204 660
- SCHNEIDER T ET AL: "Distortion reduction in cascaded slow light delays", ELECTRONICS LETTERS, IEE STEVENAGE, GB, Bd. 42, Nr. 19, 14. September 2006 (2006-09-14), Seiten 1110-1112, XP006027441, ISSN: 0013-5194, DOI: DOI:10.1049/EL:20062235

## Beschreibung

Die Erfindung betrifft ein Verfahren zur Verzögerung von optischen Signalen, die sich als Pulse in einem Wellenleiter in einer Vorwärtsrichtung ausbreiten, wobei in entgegengesetzter Richtung eine erste Pumpstrahlung in den Wellenleiter eingekoppelt wird, die eine stimulierte Brillouin Streuung (SBS) im Wellenlängenbereich der Pulse verursacht wird. Die Erfindung betrifft auch ein System zur Umsetzung des Verfahrens.

Die gezielte Beeinflussung der Ausbreitungsgeschwindigkeit optischer Pulse eröffnet ein weites Feld für Anwendungen im Bereich optischer Kommunikationsnetze, der Datenverarbeitung, der nichtlinearen Optik und optischer Messsysteme. Dabei ist die Realisierung einstellbarer optischer Pufferspeicher ein großer Schritt in Richtung eines vollständig mit optischen Komponenten betriebenen Netzes. Bislang ist die Speicherung jedoch vorwiegend auf elektrische Komponenten beschränkt und geht immer mit einer optischelektrisch-optischen Wandlung einher. Dieser zusätzliche Aufwand begrenzt nicht nur die maximale Datenrate solcher Netze, sondern erhöht mit dem zusätzlichen Energieverbrauch auch den CO₂-Anteil der Informations- und Kommunikationstechnologie.

Ein Schritt hin zur Speicherung ist die Verzögerung optischer Pulse, für die es mehrere Ansätze gibt. Zum einen beruhen diese Ansätze auf der Laufzeit eines Signals in einem Wellenleiter oder Resonator und zum anderen auf der Erzeugung einer starken Dispersion. Der erste Ansatz ermöglicht lediglich feste Verzögerungszeiten, die einem Vielfachen der Pulsdauer entsprechen, während die Verzögerungszeit über den zweiten Ansatz stufenlos variiert werden kann, allerdings immer mit einer Verzerrung des Pulses verbunden ist. Eine einfache Methode zur Erzeugung einer starken künstlichen Dispersion ist die stimulierte Brillouin Streuung ("SBS"), die gegenüber anderen Ansätzen, basierend auf der stimulierten Raman Streuung oder elektromagnetisch induzierter Transparenz, entscheidende Vorteile besitzt: Zum einen sind nur wenige mW an Pumpleistung notwendig, um hohe Verzögerungszeiten zu erreichen. Zum anderen arbeitet die SBS im ganzen Transparenzbereich aller optischen Fasern und ermöglicht damit den Einsatz von Standard Equipment heutiger optischer TK- und Daten-Netze. Zudem ist die Verzögerungsbandbreite der SBS in weiten Bereichen flexibel einstellbar.

Wie in allen dispersionsbasierten Systemen geht die Verzögerung jedoch immer mit einer Verzerrung der Pulse einher, die sich vor allem in einer Verbreiterung des Pulses äußert. Dabei begrenzen die Qualitäts-Anforderungen der jeweiligen Anwendung die zeitliche Pulsaufweitung und damit auch die Verzögerungszeit. Die Verbreiterung selbst hat zwei Ursachen: Zum einen führt das Bandpassverhalten des SBS Systems zu einer spektralen Begrenzung des Pulses und zum anderen wird die Phase des Pulses vor allem am spektralen Rand durch Nichtlinearitäten stark verzerrt.

Bisherige Ansätze zur Vermeidung der Puls-Verbreiterung bei hoher Zeitverzögerung beruhen vor allem auf einer speziellen Anpassung des Verzögerungsspektrums. Dabei ist die Zeitverzögerung selbst proportional zur Pumpleistung und umgekehrt proportional zur Verzögerungsbandbreite. Höhere Pumpleistungen können die Erhöhung der Verzögerungsbandbreite nur bedingt ausgleichen, da Sättigungseffekte in einem SBS System die maximale Verzögerungszeit begrenzen. Abhilfe schafft eine Kaskadierung mehrerer Systeme. So wurde beispielsweise mit Hilfe eines 4-stufigen Systems eine Verzögerung von 3,8 Bit erreicht. Jedoch addiert sich auch eine geringe Pulsverzerrung von Stufe zu Stufe, was in dem Fall zu einer Verbreiterung auf das 2,55-fache des Eingangspulses führte. Auch eine spezielle Anpassung des Verzögerungsspektrums führt letztendlich maximal zu einer Optimierung des jeweiligen Systems, wobei die Pulsverbreiterung auch hier nicht vollständig vermieden werden kann.

In dem Artikel von A. Wiatrek et al., "Zero-broadening measurement in Brillouin based slow-light delays", Optics Express, Vol. 17, No. 2, S. 797 - 802, Jan. 2009 , ist offenbart, dass es in einem nichtlinearen System möglich ist, einen Puls zu verzögern ohne ihn zeitlich zu verbreitern. Diese Verzögerung führt jedoch zu einer Verzerrung der Pulsform. Für Einzelpulse, beispielsweise in messtechnischen Anwendungen, ist die reine Erhaltung der Pulsdauer bereits ausreichend. In Datennetzen führt die zusätzliche Pulsverzerrung jedoch zu unerwünschten Bitfehlern und damit zu einer signifikanten Reduktion der Systemperformance.

Der Artikel von T. Schneider et al. "Distortion reduction in cascaded slow light delays" beschreibt einen experimentellen Aufbau, wobei Lichteingangspulse in einer zweistufigen Verzögerungsanordnung verzögert werden, und die Verzögerungsanordnung durch Fasern gebildet ist. Die Fasern werden beide mit einer Pumpstrahlung aus der selben Pumpquelle beaufschlagt. Die Pumpstrahlung kann auch durch unterschiedliche Pumpquellen geliefert werden.

Aufgabe der vorliegenden Erfindung ist es nunmehr, ein technisch einfach umsetzendes Verfahren und ein für die Umsetzung geeignetes optisches System zu schaffen, mit dem es möglich ist, Einzelpulse oder Pulse eines Datenstroms möglichst verzerrungsfrei zu verzögern, sodass Pulsform und Pulsbreite erhalten bleiben.

Diese Aufgaben werden durch das Verfahren mit den kennzeichnenden Merkmalen des Anspruch 1 und das optische System nach Anspruch 6 gelöst. Besondere Ausführungsformen sind in den jeweiligen Unteransprüchen genannt.

Der Kerngedanke der Erfindung liegt darin, innerhalb eines Übertragungssystems zwei Schritte oder "Stufen" vorzusehen, wobei der erste Schritt in einer konventionellen SBS-basierten Verzögerung der Pulse bewirkt, während im zweiten Schritt ein entgegenläufiges Übertragungsverhalten innerhalb des Systems realisiert wird. Wegen des gegensätzlichen, nämlich in Amplitude und Phase zur ersten Stufe umgekehrten Übertragungsverhaltens entsteht in Summe ein lineares Gesamtsystem. Der wesentliche Grundgedanke der Erfindung liegt somit in der Erzeugung eines vollständig linearen Filtersystems zur verzerrungsfreien Verzögerung optischer Pulse mittels eines zweistufigen Systems, bei dem sich beide Stufen mit entgegenläufigem Übertragungsverhalten zu einem linearen Gesamtsystem ergänzen. Durch ein solches erfindungsgemäßes Vorgehen wird eine zumindest nahezu verzerrungsfreie Verzögerung realisiert, so dass der Einsatz derartiger "Slow-Light" Systeme in Daten- und Kommunikationsnetzen möglich wird.

Der erfindungsgemäße Gedanke beruht auf der Erkenntnis, dass gedämpfte Pulsanteile am Rand des Spektrums stärker verstärkt werden als Anteile im Zentrum des Pulses. Dieser Effekt wirkt der spektralen Begrenzung durch die erste Verzögerungsstufe entgegen. Da die Beeinflussung des Pulsspektrums und der Pulsphase durch das SBS System in einem direkten Zusammenhang stehen, wie die Kramers-Kronig Beziehungen besagen, kommt es im zweiten Schritt zu einer zusätzlichen Linearisierung der Pulsphase, was den beiden Ursachen der Verbreiterung entgegen wirkt. Darüber hinaus wird der Puls auch in diesem zweiten Schritt verzögert. Durch ein Kaskadieren solcher Systeme können im Prinzip beliebige Verzögerungen ohne zusätzliche Pulsverbreiterung und Pulsverzerrung erreicht werden.

Zur Realisierung des zweiten Schrittes, respektive der zweiten Stufe, werden zwei Alternativen vorgestellt. Die erste basiert auf einem gesättigten System, wie es auch in dem oben genannten dem Artikel von A. Wiatrek et al. beschrieben wird. Demnach werden aufgrund der Sättigung leistungsstarke Spektrallinien weniger verstärkt als schwache. Im Gegensatz zu der Offenbarung in dem Artikel wird jedoch der Sättigungsgrad zusätzlich über die Leistung des Eingangssignals gezielt eingestellt, insbesondere durch eine variable Dämpfung zwischen den beiden System-Stufen. Der zweite Ansatz nutzt ein ungesättigtes lineares System, in dem das Übertragungsverhalten durch Überlagerung zweier spektral verschobener Verzögerungsbandbreiten gezielt nachgebildet wird.

Insgesamt nutzt das System den nichtlinearen optischen Effekt der stimulierten Brillouin Streuung (SBS), bei dem es zur Wechselwirkung des Lichtes eines Pumplasers mit dem Ausbreitungsmedium des Lichtleiters, insbesondere in der hier eingesetzten Glasfaser, kommt. Bei der SBS führt die örtliche Änderung der Pumpfeldstärke zu einer Änderung der Dichte im Material, die den lokalen Brechungsindex beeinflusst. Die entstehende Dichtemodulationswelle erzeugt ein Brechnungsindexgitter und bewegt sich mit Schallgeschwindigkeit im Medium in Richtung der Pumpwelle. Aufgrund der Relativgeschwindigkeit beider Wellen und des Dopplereffektes kommt es zu einer Abwärtsverschiebung der Frequenz der zurückgestreuten Anteile der Pumpwelle ("Brillouin Verschiebungsfrequenz"). Die Höhe der Brillouin Verschiebungsfrequenz ist abhängig vom Material des Ausbreitungsmediums und beträgt in der verwendeten Standard Einmoden Glasfaser rund 11 GHz bei einer Pumpwellenlänge um 1550 nm. Wird nun die Pumpwelle in Gegenrichtung der Signalwelle im Frequenzabstand der Brillouin-Verschiebungsfrequenz eingekoppelt, so wird der Pumpwelle durch den Prozess Energie entzogen und es kommt zum exponentiellen Anwachsen der Leistung der Signalwelle und damit zu einem Verstärkungsprozess, der durch die Pumpleistung selbst begrenzt wird ("Sättigung").

Neben der Verstärkung kommt es in Abhängigkeit von der SBS aber auch zu einer Änderung der Phase der Signalwelle. Der Zusammenhang zwischen Verstärkung und Phasenänderung wird durch die Kramers-Kronig Beziehungen beschrieben und führt im Fall der SBS zu einer Verzögerung des Signals ("Slow-Light"). Die Bandbreite des Verstärkungs- und Verzögerungsspektrums entsteht durch Faltung des Pumpspektrums mit dem materialabhängigen natürlichen Brillouin-Spektrum. Unter der Voraussetzung einer schmalbandigen Pumpwelle hat das entstehende Spektrum in der verwendeten Glasfaser eine Größe von etwa 30 MHz. Eine Erweiterung wird auf einfache Weise durch direkte Modulation des Pumplasers mit einem Rauschsignal erreicht, mit der eine Verbreiterung des Pumplaserspektrums erzielt wird.

Ein Puls, dessen Spektrum sich innerhalb der SBS Bandbreite befindet, wird entsprechend verzögert, wobei die Pulsverzögerung im linearen Arbeitsbereich direkt proportional zur Pumpleistung und indirekt proportional zur Verzögerungsbandbreite ist. Die Verzerrung oder Verbreiterung des Pulses hat zwei Ursachen: Das ist zum einen die geringere Verstärkung respektive Dämpfung der Flanken des Pulsspektrums. Die Fourier-Transformation zeigt, dass eine Verkleinerung der spektralen Breite zu einer Vergrößerung der zeitlichen Breite führt. Die zweite Ursache liegt im nichtlinearen Phasenverlauf im Randbereich des Verzögerungsspektrums. Eine Verbreiterung dieses Spektrums minimiert einerseits die Verzerrungen, führt aber aufgrund der o.g. Proportionalität zu einer Verminderung der Zeitverzögerung. Diese kann in dem Rahmen durch eine Erhöhung der Pumpleistung ausgeglichen werden, bis es bei höheren Pumpleistungen zur Sättigung des Prozesses kommt ("Pumpauszehrung").

Die Pulsverbreiterung wird durch ein erfindungsgemäß zweistufiges System verhindert. Die erste Stufe besteht aus dem beschriebenen herkömmlichen SBS-basierten System, das den Puls, wie erläutert, verbreitert. Die Charakteristik der zweiten Stufe wird genau umgekehrt zur ersten so eingestellt, dass es zu einer Umkehrung der Verbreiterung respektive zu einer Pulskompression und zusätzlich zu einer erhöhten Zeitverzögerung kommt. Eine solche Charakteristik kann durch eine herbeigeführte Sättigung der zweiten Stufe erreicht werden, mit der das Zentrum des Pulsspektrums viel weniger verstärkt wird als der Rand. Eine zweite Möglichkeit besteht in der Überlagerung zweier spektral verschobener SBS Gewinnspektren zur Nachbildung eines solchen Verstärkungsverhaltens. Die Addition der Charakteristika beider Stufen führt insgesamt zu einem linearen Gesamtsystem, das Pulse unter Erhaltung von Form und zeitlicher Breite verzögert.

Der wesentliche Vorteil der erfindungsgemäßen Verfahrensweise ist das Erreichen eines verzerrungsfrei arbeitenden Systems zur Verzögerung optischer Pulse, das vollständig optisch kontrolliert wird. Vorteilhaft ist, dass sich das System mit Standardkomponenten optischer Telekommunikationsnetze einfach realisieren lässt. Diese Komponenten können preiswert in hohen Stückzahlen hergestellt werden. Der nichtlineare Effekt der SBS tritt in allen Glasfasern und in deren kompletten Transparenzbereich auf. Daher kann das System leicht an die jeweiligen Netzgegebenheiten angepasst werden. Zudem kann zur Realisierung der ersten Stufe die ankommende Faser eines Kommunikationssystems als Brillouin-Medium genutzt werden.

Nachfolgend wird die Erfindung anhand der Figuren 1 bis 4 näher erläutert. Es zeigen:
- **Figur 1:**: den Aufbau eines erfindungsgemäßen Systems
- **Figur 2:**: Pulsformen an ausgewählten Stellen des Systems,
- **Figur 3:**: Filterspektren an ausgewählten Messpunkten des Systems und
- **Figur 4:**: eine alternative Realisierung der zweiten Stufe durch zwei überlagerte SBS Gewinnspektren.

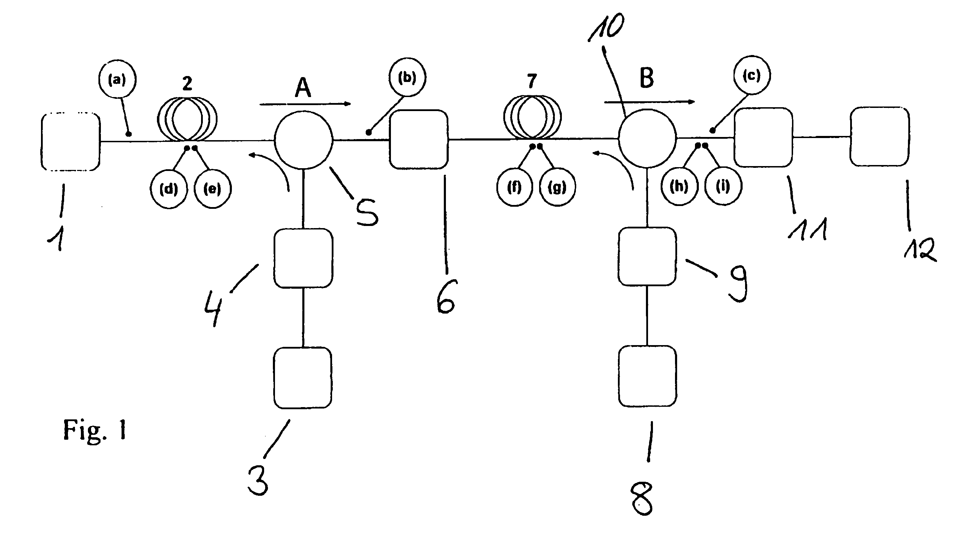

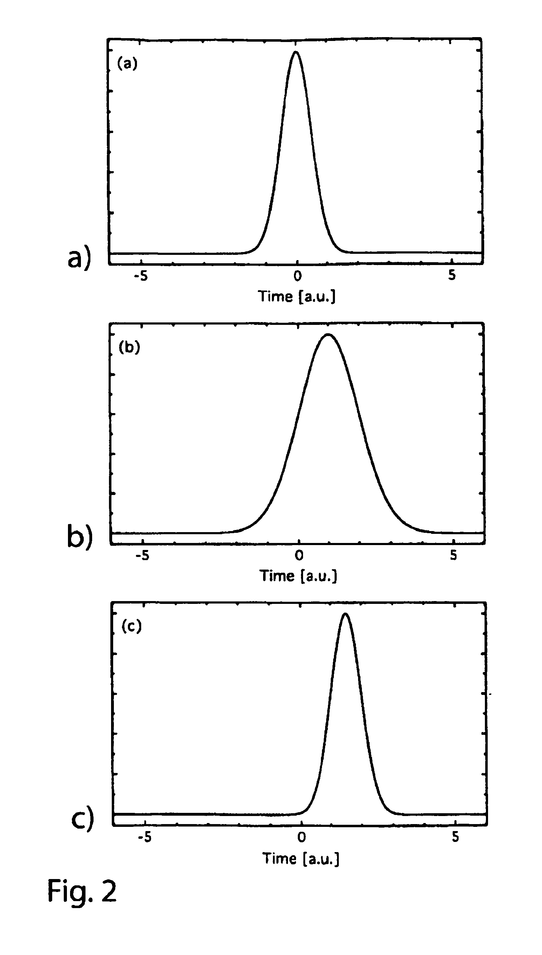

Nach Figur 1 führt die Signalquelle 1 dem System das Datensignal in Form zu verzögernder Pulse zu, wobei die Signalquelle insbesondere die Schnittstelle zu einem Kommunikationsnetz ist, so dass die anschließende Glasfaser 2 bereits Bestandteil des Datenübertragungssystems sein kann. Das System weist einen kohärenten breitbandigen Pumplaser 3 auf, der durch einen optischen Verstärker 4 verstärkt wird und über den Zirkulator 5 entgegen der Ausbreitungsrichtung der Pulse (Pfeil A) in die Glasfaser 2 eingekoppelt wird. Ein solcher Puls als Eingangssignal ist in Figur 2a dargestellt. Er wird über den Zirkulator 5 zum einstellbaren Dämpfungsglied 6 übertragen.

Die gewünschte Bandbreite des Pumplasers 3 kann über eine direkte Modulation mit einem Rauschsignal eingestellt werden. Eine optische Verstärkung kann durch einen Erbium-dotierten Faser Verstärker ("EDFA") erreicht werden. Die Trägerfrequenz des Pumplasers wird so eingestellt, dass sie gegenüber der Trägerfrequenz des Datensignals um die Brillouin Verschiebungsfrequenz erhöht ist. Die Glasfaser 2 dient als Brillouin-Medium, sodass es abhängig von der über den optischen Verstärker 4 eingestellten Pumpleistung zu einer Verstärkung und Phasenverschiebung des Datensignals kommt.

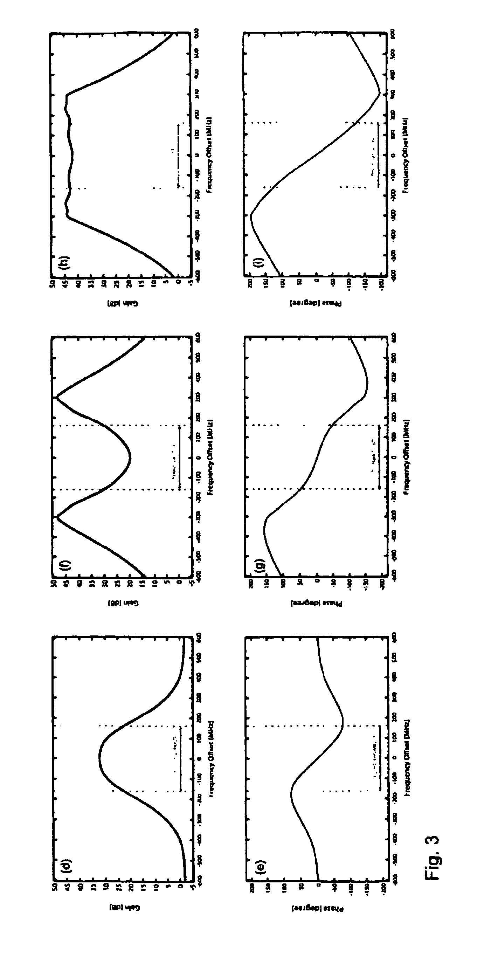

In den Diagrammen d und e der Figur 3 ist die in diesem Fall numerisch berechnete Übertragungsfunktion im Fall eines 1.4 ns-Pulses, einer Brillouin - Bandbreite von 475 MHz und einer Pumpleistung von 10 mW dargestellt. Die Messpunkte sind entsprechend in der Figur 1 gekennzeichnet. Es ist ersichtlich, dass es im Randbereich des Pulsspektrums zu einer starken Abnahme der Verstärkung (3d) und Nichtlinearitäten in der Phasenverschiebung (3e) kommt. Der Ausgangspuls der ersten Stufe ist, wie aus dem Diagramm 2b ersichtlich, gegenüber dem Eingangspuls 2a verzögert und verbreitert.

Im System ist im Rahmen der zweiten Stufe ein weiterer kohärenter breitbandiger Pumplaser 8 vorgesehen, der durch den optischen Verstärker 9 verstärkt und über den Zirkulator 10 wiederum entgegen der Ausbreitungsrichtung (Pfeil B) der Pulse in die Glasfaser 7 eingekoppelt wird. Die Bandbreite des Pumplasers 8 ist größer als die Signalbandbreite. Diese zweite Stufe wird mittels des Verstärkers 9 im Sättigungsbereich des Systems betrieben. Da das SBS System selbst als ein Verstärker angesehen werden kann, ist es durch hohe Signaleingangsleistungen oder durch hohe Pumpleistungen möglich, eine Sättigung zu erreichen. Die Signalleistung wird über das Dämpfungsglied 6, die Pumpleistung über den optischen Verstärker 9 geregelt.

In den Diagrammen f und g der Figur 3 ist die - wiederum numerisch berechnete - Übertragungsfunktion für den Ausgangspuls der ersten Stufe bei einer Brillouin-Bandbreite von 960 MHz, einer Signaleingangsdämpfung von 10 dB und einer Pumpleistung von 20 mW abgebildet. Wie ersichtlich, ist das Übertragungsverhalten bezüglich der Amplitude und der Phase umgekehrt zur ersten Stufe. Der spektrale Randbereich wird gegenüber dem Zentrum angehoben und verzögert. Über den Zirkulator 10 wird das Signal zum Dämpfungsglied 11 geführt. Die Summe der Übertragungsfunktionen beider Stufen führt zu einer zumindest nahezu linearen Gesamtfunktion, also zu einer gleichmäßigen Verstärkung und einem linear fallenden Phasengang (Diagramme (h) und (i) der Figur 3). Somit entspricht der Ausgangspuls des Gesamtsystems dem verzögerten Eingangspuls.

Aufgrund der Sättigung der zweiten Stufe, wird die Zeitverzögerung nicht über die Pumpleistung, sondern über die Verzögerungsbandbreite eingestellt, wobei eine Vergrößerung der Bandbreite zu einer Verminderung der Zeitverzögerung führt. Das Dämpfungsglied 11 dient der Leistungsanpassung des Ausgangspulses an die Schnittstelle 12. Diese kann wiederum der Eingang zu einem optischen Folgesystem sein.

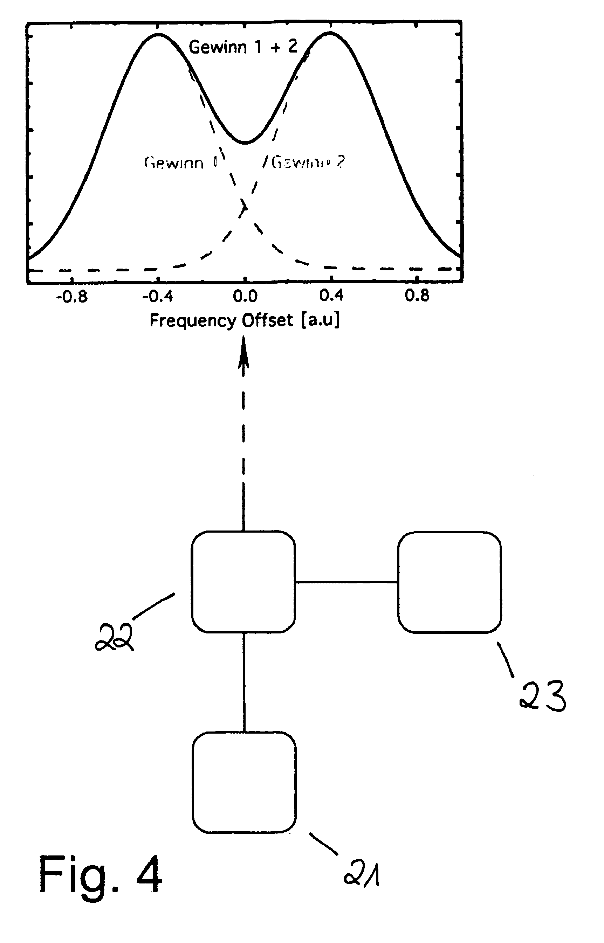

Die Sättigung der zweiten Stufe birgt zwei Nachteile: Zum einen sind relativ hohe Pumpleistungen erforderlich und zum anderen ist die Zeitverzögerung nicht mehr linear von der Pumpleistung abhängig und nimmt mit steigender Pumpleistung sogar ab. Aus diesem Grund wird diese Stufe in einer vorteilhaften Ausführungsform durch Überlagerung zweier spektral verschobener SBS Gewinnspektren realisiert, welche die Sättigungscharakteristik nachbilden. Da Amplituden- und Phasengang der Übertragungsfunktion mittels Kramers-Kronig Beziehungen miteinander verbunden sind, ergibt die so entstehende Verstärkungsfunktion eine zum Sättigungsfall identische Phasenfunktion. Die in Figur 4 dargestellte Baugruppe ersetzt in diesem Fall das Modul 8 in Figur 1.

Dabei wird der kohärente Pumplaser 21 mittels des Modulators 22 extern moduliert. Der Signalgenerator 23 erzeugt die notwendige Sinusfunktion, deren Frequenz den Abstand des jeweiligen Gewinnspektrums zum Nullpunkt festlegt. Der Arbeitspunkt des Modulators 22 wird so eingestellt, dass es zu einer Trägerunterdrückung kommt und nur die jeweils ersten Seitenbänder entstehen. Für das Modul 22 kann ein Mach-Zehnder Modulator zum Einsatz kommen. Vorteil dieses Systems ist, dass die Zeitverzögerung in der zweiten Stufe nun zusätzlich über die Pumpleistung eingestellt werden kann und im Allgemeinen auch niedrigere Pumpleistungen benötigt werden, um die Pulsverbreiterung der ersten Stufe zu kompensieren. Die Überlagerung der beiden spektral verschobenen SBS Gewinnspektren ist in dem Diagramm der Figur 4 gezeigt.

## Patentansprüche

1. Verfahren zur Verzögerung von optischen Signalen, die sich als Pulse in einem Wellenleiter (2) in einer Vorwärtsrichtung ausbreiten, wobei in einer ersten Stufe eine erste Pumpstrahlung (3) entgegen der Ausbreitungsrichtung in den Wellenleiter (2) eingekoppelt wird, die stimulierte Brillouin Streuung ("SBS") im Wellenlängenbereich der Pulse verursacht und damit ein in einer Verzögerung der Pulse resultierendes Übertragungsverhalten im Wellenleiter bewirkt,
**dadurch gekennzeichnet,**
**dass** in einer nachfolgenden Stufe durch Einkopplung einer zweiten Pumpstrahlung (8), die in ihrer Charakteristik eingestellt ist und entgegen der Ausbreitungsrichtung der durch die erste Pumpstrahlung (3) modifizierten Pulse in den Wellenleiter (7) eingekoppelt wird, ein gegenläufiges, nämlich in Amplitude und Phase zur ersten Stufe umgekehrtes Übertragungsverhalten im Wellenleiter (7) bewirkt wird, wobei aus der Abfolge der beiden Stufen ein insgesamt lineares Verhalten des Gesamtsystems resultiert, das zu einer Verzögerung optischer Pulse führt.

2. Verfahren nach Anspruch 1,
**dadurch gekennzeichnet,**
**dass** die Charakteristik der zweiten Stufe derart eingestellt ist, dass gedämpfte Pulsanteile am Rand des Spektrums stärker verstärkt werden als Anteile im Zentrum des Pulses.

3. Verfahren nach Anspruch 1 oder 2,
**dadurch gekennzeichnet,**
**dass** zum Erreichen größerer Verzögerungszeiten Systeme mit einer Abfolge einer solchen ersten und zweiten Stufe kaskadiert werden.

4. Verfahren nach einem der vorherigen Ansprüche,
**dadurch gekennzeichnet,**
**dass** die Leistung des die zweite Stufe erreichenden Eingangspulses, insbesondere durch eine variable Dämpfung zwischen den beiden Stufen, eingestellt wird.

5. Verfahren nach einem der vorherigen Ansprüche,
**dadurch gekennzeichnet,**
**dass** die zweite Stufe als ungesättigtes lineares System ausgebildet wird, in dem das Übertragungsverhalten durch Überlagerung zweier spektral verschobener Verzögerungsbandbreiten gezielt nachgebildet wird.

6. System eingerichtet zur Umsetzung des Verfahrens nach einem der vorherigen Ansprüche, aufweisend einen Wellenleiter (2,7), in dem sich Signalpulse in Vorwärtsrichtung ausbreiten, wobei in einer ersten Stufe des Systems eine erste Quelle (3) zur Erzeugung einer ersten Pumpstrahlung vorgesehen ist, wobei Mittel (5) zur Einkopplung der Pumpstrahlung in den Wellenleiter (3) entgegen der sich in Vorwärtsrichtung ausbreitenden Signalpulse vorgesehen sind, wobei ein Mittel zur Auskopplung (5) der in Vorwärtsrichtung propagierenden und durch SBS verzögerten Signalpulse vorgesehen ist,
**gekennzeichnet durch**
eine zweite Stufe aufweisend eine zweite Quelle (8) zur Erzeugung einer zweiten Pumpstrahlung, die über ein zweites Mittel (10) zur Einkopplung in den Wellenleiter (2,7) entgegen der sich in Vorwärtsrichtung verzögerten Signalpulse einkoppelbar ist, wobei die Bandbreite der zweiten Pumpstrahlung größer als die Bandbreite der Signalpulse ist.

7. System nach Anspruch 6,
**dadurch gekennzeichnet,**
**dass** die zweite Stufe mittels eines Verstärkers im Sättigungsbereich des Systems betrieben wird.

8. System nach Anspruch 7,
**gekennzeichnet durch**
einen optischen Verstärker (9) zur Regelung der Pumpleistung der zweiten Quelle (8).

9. System nach Anspruch 6,
**dadurch gekennzeichnet,**
**dass** die zweite Stufe einen kohärenten Pumplaser (21) aufweist, der mittels des Modulators (22) moduliert wird, wobei ein Signalgenerator (23) eine Sinusfunktion erzeugt und wobei der Arbeitspunkt des Modulators (22) derart einstellbar ist, dass es zu einer Trägerunterdrückung kommt und nur die jeweils ersten Seitenbänder entstehen.

10. System nach einem der Ansprüche 6 bis 9,
**gekennzeichnet durch**
ein Dämpfungsglied (6) zur Modifikation der Signalleistung.

11. System nach einem der Ansprüche 6 bis 10,
**gekennzeichnet durch**
ein Dämpfungsglied (11) zur Leistungsanpassung des Ausgangspulses an eine das System abschließende Schnittstelle (12).

## Claims

1. Method for delaying of optical signals, which propagate as pulses in a wave guide (2) in a forward direction, wherein in a first stage a pump beam (3) is injected into the wave guide (2) contrary to the direction of propagation, which causes stimulated Brillouin scattering ("SBS") in the wave range of the pulses und thus effects a transfer behavior in the wave guide, which results in a delay of the pulses,
**characterized in**
**that** in a subsequent stage by injection of a second pump beam (8), which is adjusted in its characteristic and is injected into the waveguide (7) contrary to the direction of propagation of the pulses modified by the first pump beam (3), a transfer behavior, which is opposing, namely contrary regarding amplitude and phase, is effected in the wave guide (7), wherein through succession of both stages a linear behavior of the overall system results, which leads to a delay of optical pulses.

2. Method according claim 1,
**characterized in**
**that** the characteristic of the second stage is adjusted such, that damped portions of the pulses at the border of the spectrum are amplified stronger than portions in the center of the pulses.

3. Method according claim 1 or 2,
**characterized in**
**that** for achieving larger delay times systems with a succession of such a first and second stage are cascaded.

4. Method according to one of the preceding claims,
**characterized in**
**that** the power of the incoming pulse, which reaches the second stage, is in particular adjusted via a variable damping between both stages.

5. Method according to one of the preceding claims,
**characterized in**
**that** the second stage is designed as an unsaturated linear system, in which the transfer behavior is selectively reproduced by an overlay of two spectral displaced delaying bandwidths.

6. System configured for implementing the method according to one of the preceding claims, comprising a waveguide (2,7), in which signal pulses propagate in a forward direction, wherein in a first stage of the system a first source (3) is provided for generating a first pump beam, wherein means (5) are provided for injecting the pump beam into the wave guide (3) contrary to the signal pulses propagating in a forward direction, wherein a means is provided for releasing (5) the signal pulses propagating in a forward direction and delayed by SBS,
**characterized by**
a second stage comprising a second source (8) for generating a second pump beam, which is injectable via a second means (10) for injecting into the wave guide (2,7) contrary to the signal pulses delayed in the forward direction, wherein the bandwidth of the second pump beam is larger than the bandwidth of the signal pulses.

7. System according claim 6,
**characterized in**
**that** the second stage is operated by an amplifier in the saturation region of the system.

8. System according claim 7,
**characterized by**
an optical amplifier (9) for controlling the pumping power of the second source (8).

9. System according claim 6,
**characterized in**
**that** the second stage comprises a coherent pumplaser (21), which is modulated by the modulator (22), wherein a signal generator (23) generates a sinusfunction and wherein the operating point of the modulator (22) is adjustable in a manner, that a carrier suppression is effected and merely the respective first sidebands are created.

10. System according to any of claims 6 to 9,
**characterized by**
a damping member (6) for modifying the signal power.

11. System according to any of claims 6 to 10,
**characterized by**
an damping member (11) for adjusting the power of the outcoming pulse to an interface (12) terminating the system.

## Revendications

1. Procédé pour retarder des signaux optiques qui se propagent en tant qu'impulsions dans un guide d'ondes (2) dans une direction vers l'avant, moyennant quoi lors d'une première étape, un premier rayonnement de pompage (3) est couplé à l'encontre de la direction de propagation à l'intérieur du guide d'ondes (2), provoque la diffusion de Brillouin stimulée (« SBS ») dans la plage des longueurs d'ondes des impulsions et produit ainsi un comportement de transmission dans le guide d'ondes résultant en un retard des impulsions, **caractérisé en ce que**, lors d'une étape suivante, grâce à un couplage d'un deuxième rayonnement de pompage (8) dont la caractéristique est réglée et qui est couplé à l'encontre de la direction de propagation des impulsions modifiées par le premier rayonnement de pompage (3) à l'intérieur du guide d'ondes (7), on provoque un comportement de transmission opposé, à savoir inverse en amplitude et en phase par rapport à la première étape, dans le guide d'ondes (7), moyennant quoi grâce à la succession des deux étapes, il en résulte un comportement globalement linéaire du système global conduisant à un retard d'impulsions optiques.

2. Procédé selon la revendication 1, **caractérisé en ce que** la caractéristique de la deuxième étape est réglée de manière à ce que des parts d'impulsion atténuées au bord du spectre soient davantage amplifiées que des parts au centre de l'impulsion.

3. Procédé selon les revendications 1 ou 2, **caractérisé en ce que**, pour atteindre des temps de retard plus importants, on monte des systèmes en cascade avec une succession d'une telle première et deuxième étapes.

4. Procédé selon l'une des revendications précédentes, **caractérisé en ce que** la puissance de l'impulsion d'entrée parvenant à la deuxième étape est réglée en particulier grâce à une atténuation variable entre les deux étapes.

5. Procédé selon l'une des revendications précédentes, **caractérisé en ce que** la deuxième étape est réalisée en tant que système linéaire non saturé dans lequel le comportement de transmission est reproduit de manière ciblée par superposition de deux largeurs de bande de retard à décalage spectral.

6. Système étudié pour la mise en oeuvre du procédé selon l'une des revendications précédentes, présentant un guide d'ondes (2, 7) dans lequel des impulsions de signaux se propagent en direction vers l'avant, moyennant quoi dans une première étape du système, on prévoit une première source (3) pour générer un premier rayonnement de pompage, des moyens (5) étant prévus pour le couplage du rayonnement de pompage à l'intérieur du guide d'ondes (3) à l'encontre des impulsions de signaux se propageant en direction vers l'avant, un moyen pour le découplage (5) des impulsions de signaux retardées par SBS se propageant en direction vers l'avant étant prévu,
**caractérisé par** une deuxième étape présentant une deuxième source (8) pour générer un deuxième rayonnement de pompage, lequel peut être couplé, grâce à une deuxième moyen (10) pour le couplage, à l'intérieur du guide d'ondes (2, 7) à l'encontre des impulsions de signaux retardées en direction vers l'avant, la largeur de bande du deuxième rayonnement de pompage étant plus importante que la largeur de bande des impulsions de signaux.

7. Système selon la revendication 6, **caractérisé en ce que** l'on fait fonctionner la deuxième étape à l'aide d'un amplificateur dans la plage de saturation du système.

8. Système selon la revendication 7, **caractérisé par** un amplificateur optique (9) pour régler la puissance de pompage de la deuxième source (8).

9. Système selon la revendication 6, **caractérisé en ce que** la deuxième étape présente un laser de pompage (21) cohérent qui est modulé à l'aide du modulateur (22), un générateur de signaux (23) générant une fonction sinusoïdale et le point de fonctionnement du modulateur (22) pouvant être réglé de manière à ce qu'il y ait une suppression de la porteuse et que seules les premières bandes latérales respectives soient formées.

10. Système selon l'une des revendications 6 à 9, **caractérisé par** un élément d'atténuation (6) pour la modification de la puissance du signal.

11. Système selon l'une des revendications 6 à 10, **caractérisé par** un élément d'atténuation (11) pour l' adaptation de la puissance de l'impulsion de sortie à une interface (12) terminant le système.
